# EUROPEAN PATENT SPECIFICATION

(11) **EP 3 482 110 B1**
(45) Date of publication and mention of the grant of the patent: **24.06.2020**
(21) Application number: 16745414.9
(22) Date of filing: 05.07.2016
(51) Int. Cl.: F16K 31/50, F16K 41/02

(54) **A METHOD FOR ASSEMBLING A VALVE AND A VALVE**
VERFAHREN ZUR MONTAGE EINES VENTILS SOWIE VENTIL
PROCÉDÉ D'ASSEMBLAGE D'UNE SOUPAPE, ET SOUPAPE

(43) Date of publication of application: 15.05.2019
(73) Proprietor: AVK Holding A/S, 8464 Galten (DK)
(72) Inventor: NORMAND, Kenneth, 8680 Ry (DK)
(74) Representative: Patentgruppen A/S
(86) International application number: PCT/DK2016/050237
(87) International publication number: WO 2018/006911

(56) References cited:
- EP-A1- 1 516 138
- WO-A1-2016/082833
- DE-A1- 4 244 284
- US-A- 3 096 999
- US-A- 3 240 520
- US-A- 5 201 335
- US-A- 5 265 917
- US-A- 5 279 320
- US-A1- 2015 377 381

## Description

### Field of the invention

The invention relates to a method for assembling a valve and a valve for control of a fluid flow, wherein the valve comprises a valve housing having a stem hole, a valve stem and collar means.

### Background of the invention

A shaft operated valve or stem operated valve - such as a gate valve - typically comprises a stem provided with a threaded part meshing with a nut of a wedge. Thus, when the shaft is rotated the wedge will be displaced up or down to open or close the fluid passage through the valve.

To ensure that the shaft is axially fixed it is known from e.g. WO 95/19518 A1 to provide the valve housing with a fixed collar meshing with circular protrusions on the shaft. In WO 95/19518 A1 the collar is fixed in relation to the valve housing by means of a locking ring and from WO 95/19518 A1 it is known to lock the collar by dividing the valve housing and assemble it around the collar. In both embodiments the stem and the collar comprise a number or radially extending and meshing friction surfaces ensuring the fluid control means, the shaft means, the collar means and/or other parts of the valve will be better protected against damaging overloads no matter which extreme position fluid control means reached - e.g. no matter if a wedge of a gate valve is in fully open or fully closed position. I.e. in this way a great friction force between the friction surfaces of stem and the collar will be generated as soon as the axial force is increased - due to the fluid control means reaching an extreme position. No matter the direction of the axial force.

From US 2015/377381 it is known to provide an adaptor for coupling together actuators of varying designs to stem of valves.

And from US 5 279 320 it is known to provide a gate valve with a collar which engages the stem of the valve to fix the stem against axial displacement in relation to a housing of the valve.

WO 2016/082833 discloses a gate valve comprising a collar which engages the stem of the valve.

And from DE 42 44 284 it is known to provide a divided collar meshing with protrusions of a stem.

However, these valve designs are difficult and time consuming to assemble.

An object of the invention is therefore to provide for a more efficient method of assembling a valve and a valve that is easier to assemble.

### The invention

The invention relates to a method for assembling a valve. The method comprises the steps of
- assembling a stem assembly by positioning collar means on a valve stem so that collar friction surfaces of the collar means meshes with stem friction surfaces of the valve stem to substantially prevent mutual axial displacement between the collar means and the valve stem,
- bending resilient locking means of the collar means inwards by forcing the stem assembly into a stem hole in a valve housing, wherein an inner diameter of the stem hole is smaller than the outer diameter of the locking means, and
- locking the axial position of the stem assembly in the valve housing by positioning the locking means at a locking groove in the stem hole to allow the resilient locking means to expand outwards into the locking groove.

By forming the locking means resilient the locking means is bended inwards as the stem assembly is pushed into the stem hole and when the locking means reaches the locking groove the locking means will spring back out into the locking groove to fix the axial position of the collar means. This is advantageous in that it reduces number of parts and it enables that the stem assembly can be mounted and fixed in a single manufacturing process. Furthermore, since the collar means and particularly the locking means do not have to be machined or in other ways adapted during the assembly process the collar means can be made from a material more suited for its purpose as means for axial fixation of the stem.

In this context the term "collar means" should be understood as any kind of ring, band, round flange or another kind of collar suitable for at least partly encircling the stem of a valve and transferring axial forces between the stem and the valve housing of a valve. However, it should be noted that this does not in any way exclude that the collar means could be axially and/or radially divided into more than one substantially separate parts and/or sectors.

Furthermore, it should be noted that in this context the term "valve stem" should be understood as any kind of shaft, spindle, rod, axle or another kind of stem suitable for transferring rotation from outside the valve housing and to the fluid control means inside the valve housing.

It should also be noted that in this context the term "resilient locking means" should be understood as any kind of protrusion, pins, barbs, skirt or other kind of locking part being resiliently formed or having a resilient quality making it suitable for being bend inwards during the assembly process so that it on its own will spring back out into the locking groove once the correct position has been reached in the valve housing.

In an aspect of the invention, positioning the locking means at the locking groove includes pushing the stem assembly against a stop in the stem hole.

Providing the stem hole with a stop against which the stem assembly is pushed is advantageous in that it provides simple means for ensuring that the stem assembly is correctly positioned in the valve housing. Furthermore, the stop also aids in transferring axial forces to the valve housing in one direction.

In an aspect of the invention, the collar means are pushed against the stop.

It is advantageous to push the collar means against the stop so that the axial forces do not have to be transferred through the friction surfaces - which would be the case if the stem was pushed against the stop. This will aid in securing the axial position of the collar means during large axial loads while still ensure correct operation of the valve.

In an aspect of the invention, the collar means is positioned on the valve stem by placing more than one radially divided collar sector parts around the valve stem.

The friction surfaces have to mesh substantially to ensure the correct function and it is therefore advantageous to divide the collar means into e.g. two separate semi-circular parts that can easily be placed on the stem so that the friction surfaces mesh.

In an aspect of the invention, the more than one radially divided collar sector parts are positioned to substantially enclose the valve stem.

A quality of the friction surfaces is that they mutually touch over a relatively large area to generate a large friction force when forced together. It is therefore advantageous that the collar sector parts substantially enclose the valve stem to form larger meshing friction surfaces.

In an aspect of the invention, the valve is a valve according to any of the valves described in the following.

The invention also relates to a valve for control of a fluid flow. The valve comprises a valve housing having a stem hole, wherein a locking groove is arranged in the stem hole. The valve also comprising a valve stem extending at least partly through the stem hole, wherein the valve stem comprises stem friction surfaces, and collar means comprising collar friction surfaces, wherein the collar friction surfaces meshes with the stem friction surfaces to substantially prevent mutual axial displacement between the collar means and the valve stem. The valve is characterized in that the collar means further comprises resilient locking means extending into the locking groove to substantially prevent mutual axial displacement between the collar means and the valve housing.

Forming the collar means with resilient locking means is advantageous in that the resilient locking means enables that the locking means can be forced inwards during the assembly process and then bounce back out into the locking groove when it reaches the correct position. Thus, the assembly process is simplified and the number of parts can be reduced. Furthermore, the resilient quality of the locking means ensures that the locking means maintains its position in the locking groove over time - substantially no matter how hard the valve is manhandled - thus, ensure prober function of the valve during the life of the valve.

In an aspect of the invention, an outside diameter of the locking means gradually increases towards a free end of the collar means.

It is advantageous that the outer diameter of the locking means gradually increases towards a bottom free end of the collar means (i.e. the end facing downwards towards the fluid control means - e.g. a wedge) so that when the collar is pushed into the stem hole the locking means is gradually bend inwards to ensure a smooth assembly process. Furthermore, this design also provides a barb quality to the locking means ensuring better fixation in the locking groove.

In an aspect of the invention, a wall thickness of the locking means is reduced in relation to a wall thickness of at least a part of the remaining collar means to increase the resilient quality of the locking means.

The walls of upper part of the collar means have to be relatively thick to ensure sufficient support to the friction surfaces when subject to large axial forces. However, this upper part is not resilient and it is therefore advantageous to form the locking means with reduced wall thick ness to ensure sufficient resilience.

In an aspect of the invention, the locking means is provided with slits at least partly extending in an axial direction of the collar means.

During the assembly process the outer diameter of the locking means will have to be reduced when traveling through the stem hole. It is therefore advantageous to provide the locking means with slits to better allow this reduction of outer diameter.

In an aspect of the invention, an outer diameter of the locking means is larger than an outer diameter or the remaining collar means.

It is advantageous to form the outer diameter of the locking means larger than the outer diameter or the remaining collar means so that the collar means may fit in the stem hole and also ensuring that the resilient locking means will expand out into the locking groove.

In an aspect of the invention, a free end of the locking means taper towards an outer edge.

Forming the bottom free end of the locking means so that it tapers outwards towards the outer edge is advantageous in that it further increases the barb quality of the locking means in that when the collar means is forced downwards - i.e. towards the wedge - the locking means will tend to dig harder into the locking groove and fix the axial position of the collar means even harder.

In an aspect of the invention, the collar means comprises more than one set of collar friction surfaces and the valve stem comprises more than one set of stem friction surfaces.

Forming the collar means and the stem with more than one set of friction surfaces is advantageous in that it hereby is possible to distribute the load on the friction surfaces over a greater area of the stem and the collar means, thereby reducing the risk of local stress concentrations.

In an aspect of the invention, the valve stem is made from a first material and the collar means is made from a second material, and wherein the first material is different from the second material.

If the stem friction surfaces and the collar friction surfaces are made from the same material the risk of seizing is drastically increased. Thus it is advantageous to form the abutting friction surfaces of different material.

In an aspect of the invention, the valve stem is made from stainless steel.

In a valve the valve stem will typically extend outside the valve housing to enable that the fluid control means may be operated from outside the valve housing. However, since the valve is often buried underground or in other ways located in harsh environment it is advantageous to form the valve stem in a durable and inert material such as stainless steel.

In an aspect of the invention, the collar means is made from brass.

Brass is a relatively hard and strong material making it suited for forming the set of collar friction surfaces. A suited brass material could be the brass alloy sold under the registered tradename "Eco Brass"

In an aspect of the invention, the set of stem friction surfaces are formed circumferential on an outside of the valve stem and in an aspect of the invention, the collar friction surfaces are formed on an inside of the collar means which enables that the stem friction surfaces and the collar friction surfaces may easily mesh.

In an aspect of the invention, the collar means is formed by more than one collar sector parts divided in an axial direction.

Forming the collar means from more than one collar sector shell parts is advantageous in that it enables that the collar means easily can be mounted on the stem even if the friction surfaces has to mesh.

In an aspect of the invention, the collar means substantially encircles the valve stem.

Forming the collar means so that they substantially encircle the stem is advantageous in that it hereby is possible to form a larger contact area between the stem friction surfaces and the collar friction surfaces.

In an aspect of the invention, the valve is a stem operated gate valve.

In gate valves the wedge travels a relative long distance to open or close the valve. Thus, in shaft operated gate valves the shaft has to be long and is therefore particularly vulnerable in relation to axial overload which more easily may deform the long and slender shaft means of this type of valve. It is therefore particularly advantageous to use the present invention in relation with this specific valve type.

In an aspect of the invention, the collar means comprises at least one full solid ring.

Forming the collar means as a continuous ring is advantageous in that it simplifies the manufacturing process and reduces logistical problems.

In an aspect of the invention, the collar means is mounted on the valve stem by means of shrinkage.

If the stem friction surfaces and the collar friction surfaces have to mesh and the collar means are formed as a continuous ring, it is advantageous to mount the collar means on the stem by means of shrinkage in that this ensures that the friction surfaces are in close contact with each other after the mounting process.

In an aspect of the invention, the collar means comprises at least one ring including an axial slit.

Forming the collar means as a single ring having a sing slit is advantageous in that the slit enables that the collar means may easily be mounted on the stem while at the same time reducing the number of parts.

### Figures

An embodiment of the invention will be described, by way of non-limiting example, in the following with reference to the figures in which:
- fig. 1.: illustrates a gate valve, as seen in perspective,
- fig. 2: illustrates a partial cross section through the middle of a gate valve, as seen from the front,
- fig. 3: illustrates a cross section through the middle of the top of a gate valve before a stem assembly is inserted, as seen from the front,
- fig. 4: illustrates a cross section through the middle of the top of a gate valve during insertion of a stem assembly, as seen from the front,
- fig. 5: illustrates a cross section through the middle of the top of a gate valve with a stem assembly inserted, as seen from the front,
- fig. 6: illustrates a cross section through the middle of collar means, as seen from the front,
- fig. 7: illustrates collar means formed by two collar sector parts, as seen in perspective,
- fig. 8: illustrates a cross section through a first embodiment of a stem assembly, as seen from the front, and
- fig. 9: illustrates a cross section through a second embodiment of a stem assembly, as seen from the front.

### Detailed description

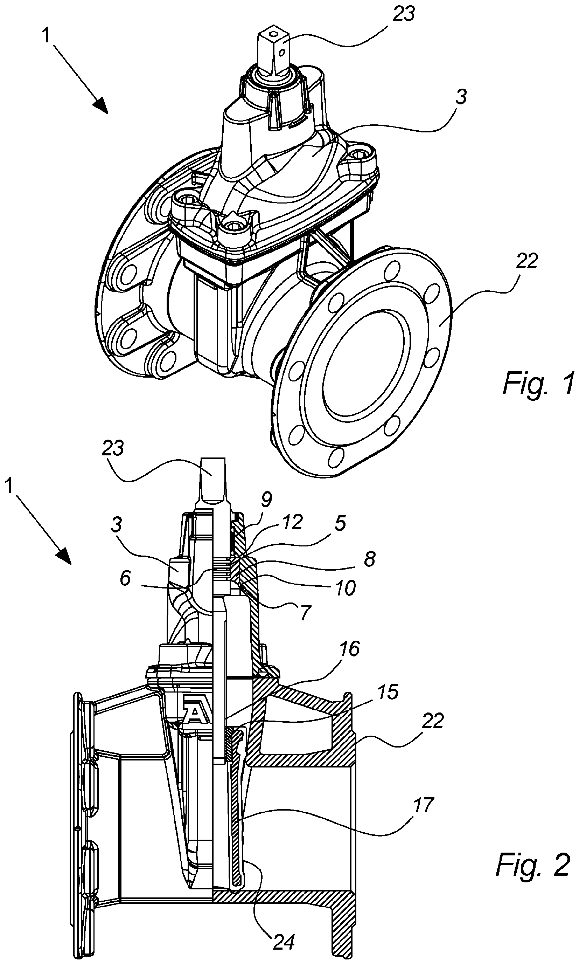

Fig. 1 illustrates a gate valve 1, as seen in perspective and fig. 2 illustrates a partial cross section through the middle of a gate valve 1, as seen from the front.

A gate valve 1, also known as a sluice valve, is a valve 1 that opens by lifting wedge 17 out of the path of a fluid passing through the valve housing 3 of the valve 1. A distinct feature of a gate valve 1 is the sealing surfaces between the wedge 17 and wedge seats are substantially planar, so gate valves 1 are often used when a straight-line flow of fluid and minimum restriction is desired. The faces of the wedge 17 of a gate valve 1 are often at least partly wedge shaped, but they can also be parallel.

In this embodiment the valve 1 comprises a valve housing 3 in which fluid control means are arranged to allow or prevent flow of fluid through the valve housing 3. In this embodiment the valve housing comprises end flanges 22 enabling that the valve 1 may be connected to a pipe (not shown) at either end of the valve housing 3.

In this embodiment a valve stem 4 in the form of a shaft 4 extends down through the top of the valve housing 3. In this embodiment the bottom part of the valve stem 4 is provided with external thread 16 meshing with internal thread of a nut 15. The nut 15 is rigidly connected to the wedge 17 so that when the valve stem 4 is rotated the nut 15 and the wedge 17 will travel up and down the valve stem 4 depending of the direction of the rotation i.e. the fluid control means are arranged to be displaced along the rotational axis of the valve stem 4 in accordance with rotation of the valve stem 4. Thus, when the wedge 17 reaches an extreme position - either fully closed or fully open - the wedge 17 will be physically blocked against further travel. So if the valve stem 4 does not stop rotating - when an extreme position has been reached - the rotation will generate a substantial axial load on the valve stem 4, the fluid control means and other parts of the valve 2 and if the rotation is not stopped in time the valve stem 4, the wedge 17 or other may be deformed or the valve 1 may in another way be damaged by the axial load.

Thus, in this embodiment the valve stem 4 is substantially fixed against axial displacement by means of collar means 8 comprising a set of collar friction surfaces 5 arranged to mesh with a set of stem friction surfaces 6 of the valve stem 4.

In this embodiment the upper end of the valve stem 4 extends out of the valve housing 3 and is provided with a connection arrangement 23 in the form of four flat surfaces providing the upper end of the valve stem 4 with a square shape. The connection arrangement 23 enables that the valve stem 4 may be manually rotated e.g. by means of a key, a wrench, a hand wheel or other or automatically operated by means of a motor, an actuator or other.

In another embodiment the valve 1 could be a globe valve 1 comprising fluid control means including a movable disk-type element and a stationary ring seat in a generally spherical body. Globe valves 1 are named for their spherical body shape with two halves of the valve housing being separated by an internal baffle. This has an opening that forms a seat onto which a movable plug of the fluid control means can be screwed in to close (or shut) the valve 1. The plug is also called a disc or disk. In globe valves 1, the plug is connected to a valve stem 4 which can be operated from outside the valve housing 3.

In another embodiment the valve 1 could be a knife valve 1 which essentially is the same as a gate valve 1 where the wedge 17 is formed with a knife shape enabling that the wedge 17 made cut through extremely thick liquids or semi-liquids.

In another embodiment the valve 1 could be a needle valve 1 which is a type of valve wherein the fluid control means comprises a small port and a threaded, needle-shaped plunger. This type of valve 1 allows precise regulation of flow, although it is generally only capable of relatively low flow rates.

Or, in another embodiment the valve 1 could be another type of shaft operated valve.

To prevent the wedge 17 from rotating along with the rotation of the valve stem 4, the wedge 17 is in this embodiment arranged to be guided by guide means 24 extending along either side of the valve housing 3.

In this embodiment the stem friction surfaces 6 substantially match the collar friction surfaces 5. However, in another embodiment more play could be arranged between the mutual surfaces 5, 6. It should also be noted that some sort of tolerance or even clearance between the opposing surfaces 5, 6 will always be present to some degree - i.e. there will obviously be some sort of production tolerance, there will be differences due to wear and tear and there could be deliberate tolerance or clearance so that the opposing surfaces 5, 6 do substantially not touch during travel between the extreme positions of the wedge 17.

In this embodiment the valve stem 4 is made from stainless steel but in another embodiment it could be made from steel, cast iron, titanium, brass, aluminium or another metal or another material such as plastic, wood, ceramics or other or any combination thereof.

In this embodiment the collar means 8 are made from brass but in another embodiment it could be made from steel, cast iron, titanium, bronze, aluminium or another metal or another material such as plastic, wood, ceramics or other or any combination thereof.

In another embodiment at least one of the matching surfaces 5, 6 could comprise some sort of surface treatment e.g. arranged to increase or decrease friction, to extend the life of the surfaces 5, 6 to prevent corrosion, to enable lubrication - e.g. self-lubrication or other. I.e. in another embodiment one or more of the matching surfaces 5, 6 could comprise a coating of another metal type, of ceramic, of a composite material, of a plastic material or another type of surface treatment. Or in another embodiment one or more of the surfaces 5, 6 could be tempered or at least comprise some sort of tempering treatment.

Thus, when the valve stem 4 are made from stainless steel and the collar means 8 are made from brass the friction coefficient between the stem friction surfaces 6 and the collar friction surfaces 5 will in this case be around 0.35. However, in another embodiment - particularly if one of both of the valve stem 4 and the collar means 8 are made from a different material - the friction coefficient could be bigger - such as 0.45, 0.6, 0.7 or even bigger - or smaller - such as 0.3, 0.25, 0.2 or even smaller.

However, it should be noted, that if the friction coefficient between the stem friction surfaces 6 and the collar friction surfaces 5 is too little the meshing friction surfaces 5, 6 will not generate the desired braking effect and the risk of damaging parts of the valve 1 is increased. However, if the friction coefficient between the abutting friction surfaces 5, 6 becomes too high more force is needed to operate the valve 1 during normal operation. Thus, an advantageous relationship between safety and functionality is desired.

It should be noted that in this context the term "friction coefficient" should be understood as the static friction coefficient between dry, un-lubricated friction surfaces 5, 6 of the valve stem 4 and collar means 8.

In this embodiment the valve stem 4 comprises four sets of stem friction surfaces 6 and the collar means 8 likewise comprises four sets of collar friction surfaces 5. However, in another embodiment the valve stem 4 and/or the collar means 8 could comprise another number of friction surfaces 5, 6 - such as one, two, three, five, six or even more.

In an aspect of the invention, the valve 1 could comprise lubrication means (not shown) arranged to supply lubrication between at least a part of the set of stem friction surfaces 6 and the set of collar friction surfaces 5.

Arranging lubrication means in or on the valve 1 is advantageous in that it hereby is possible to at least occasionally lubricate the abutting surfaces 5, 6 between the stem friction surfaces 6 and the collar friction surfaces 5 and hereby reduce friction during normal operation of the valve 1.

It should be noted that in this context the term "lubrication means" should be understood as any kind of hole, channel, duct or other in the collar means 8, the valve stem 4, the valve housing 3 or other suited for distributing lubrication or any other kind of passive or active lubricator suited for supplying lubrication between at stem friction surfaces 6 and collar friction surfaces 5 of a valve 1.

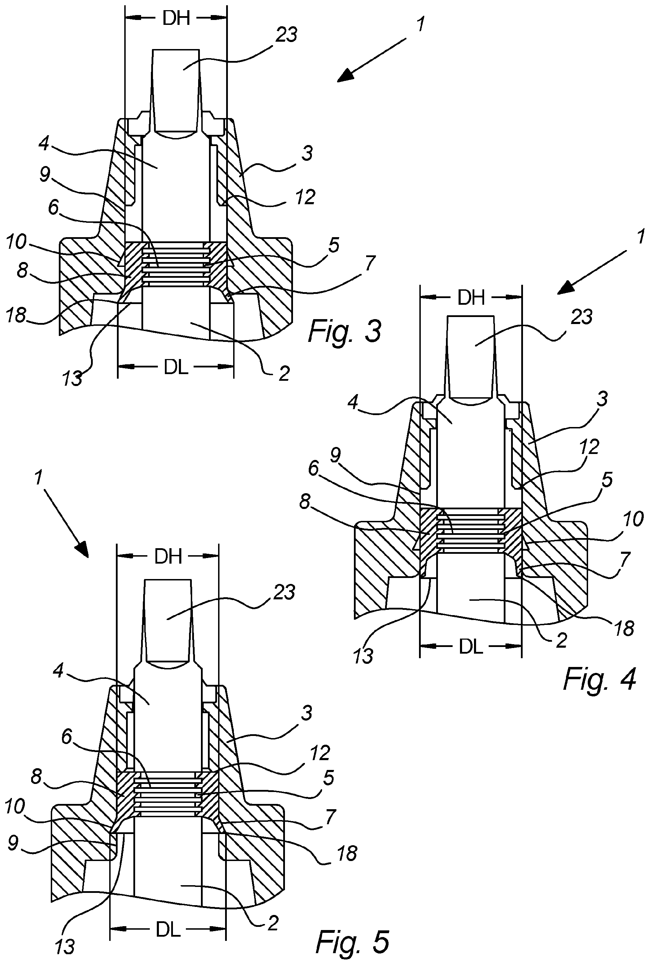

Fig. 3-5 illustrates a cross section through the middle of the top of a gate valve 1 before a stem assembly 2 is inserted, while a stem assembly 2 is being inserted, and after stem assembly 2 is inserted as seen from the front.

Figure 3 shows a preassembled stem assembly 2 placed in a stem hole 9 of a valve housing 3 before the stem assembly 2 is forced into place.

In this embodiment the stem assembly 2 comprises only the valve stem 4 and the collar means 8 but in another embodiment the stem assembly 2 could also comprise seals, bearings, manchettes, O-rings, gaskets or other.

In this embodiment the stem assembly 2 is forced up into the stem hole 9 from the inside side of the valve 1 - i.e. from the bottom and upwards at seen when the valve is arranged in normal operation with the connection arrangement 23 facing upwards. However, in another embodiment the stem assembly 2 could be mounted in the opposite direction in the stem hole 9.

In this embodiment the locking means 7 is forced inwards by the bottom edge of the stem hole 9 as the stem assembly 2 is pushed into the stem hole 9. However, in another embodiment a mounting fixture would comprise means to push the locking means 7 inwards before the locking means 7 is inserted in the stem hole 9 and this fixture would then release the locking means 7 as they are mounted in the stem hole 9.

Figure 4 discloses that once the stem assembly 2 is pushed a little into the stem hole 9, the resilient locking means 7 is maintained at an outer diameter DL substantially equal to the inside diameter DL of the stem hole 9.

However, once the resilient locking means 7 reaches the locking groove 10 in the side wall of the stem hole 9 the resilient locking means 7 will bounce back out into the locking groove 10 to lock the axial position of the collar means 8 - and thereby the stem assembly 2 - in relation to the valve housing 3.

In this embodiment the locking groove 10 is a uniform groove formed all the way around the wall of the stem hole 9. However, in another embodiment the locking groove 10 could also or instead comprise radially extending holes, spaced apart slits or other continuous or spaced apart surface irregularities in the stem hole 9.

In this embodiment the collar means 8 comprises one set of locking means 7 arranged in the same axial position on the collar means 8. However, in another embodiment the collar means 8 could comprises more than one set of locking means 7 arranged in several different axial positions on the collar means 8 or the single set of locking means 7 could be arranged in different axial positions on the collar means 8 so that the locking groove 10 would also have to be adapted to the design of the locking means 7. Locking means 7 formed more as local holes, slits or other in the side wall of the stem hole 9 is advantageous in that the locking means 7 meshing with the locking groove 10 could then also lock the collar means 8 against rotation in relation to the valve housing 3.

In this embodiment the locking means 7 taper outwards towards the bottom edge to ease the mounting process. Once the locking means 7 is in place in the locking groove 10 this design will also ensure a barb effect if the collar means 8 is pushed downwards. However, this design also entails that if the collar means 8 is pushed upwards the locking effect of the locking means 7 is not as strong as when the collar means 8 is pushed downwards.

Thus, in this embodiment of the invention the diameter of the upper part of the stem hole 9 is reduced - so that the diameter of the stem hole 9 is smaller than the outer diameter DC of the locking means - hereby forming a stop 12 in the stem hole 9 preventing the collar means from traveling further upward in the stem hole 9 both during the assembly process and the subsequent use of the valve 1. In a preferred embodiment the stop 12 is arranged so that when the stem assembly 2 is pushed against the stop, the locking means 7 is correctly positioned in front of the locking groove 10.

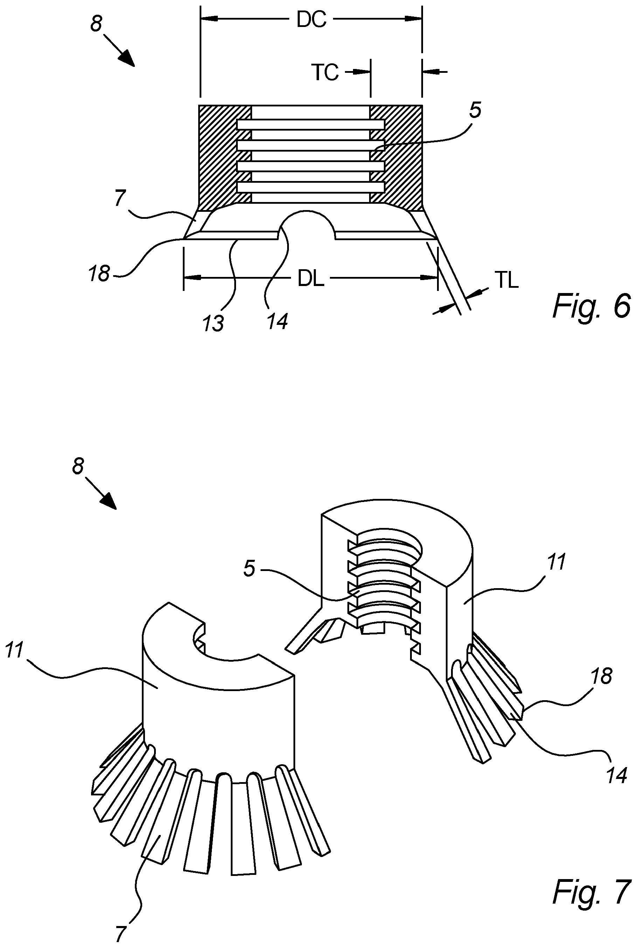

Fig. 6 illustrates a cross section through the middle of collar means 8, as seen from the front.

In this embodiment the bottom surface at the free end 13 of the locking means 7 taper towards the outer edge 18 to form the outer edge angle acute, to increase the barb effect of the locking means 7 in the locking groove 10.

In this embodiment the collar means 8 is formed as a single full solid ring arranged to completely encircle the valve stem 4. In this case the collar means 8 could advantageously be mounted on the stem friction surfaces 6 by means of shrinking - although other assembly methods also are available to the skilled person.

In this embodiment the locking means 7 is provided with slits 14 in the form of cutouts to enable or aid in allowing that the diameter DL of the resilient locking means 7 may be reduced during the assembly process.

In this embodiment the wall thickness TC of the collar means 8 comprising the collar friction surfaces 5 is considerably thicker than the wall thickness TL of the part of the collar means 8 comprising the locking means 7 to form the locking means 7 more resilient than the remaining part of the collar means 8. However, in another embodiment the thicknesses TL, TC could be substantially equal or the locking means 7 could be thicker than the remaining collar means 8.

Fig. 7 illustrates collar means 8 formed by two collar sector parts 11, as seen in perspective.

In this embodiment the locking means comprises a number of slits 14 extending in an axial direction all the way through the locking means 7 and up into a bottom part of the remaining collar means 8. However, in another embodiment the slits 14 would not only extend axial but could also at least partly extend radially e.g. to form at least partly helical slits or the like.

In another embodiment the slits 14 could be designed in consideration of a manufacturing method of the collar means 8 - i.e. so that a full ring collar means 8 or semi-circle collar means 8 can be moulded or forged.

In another embodiment the slits 14 could be formed in a number of other ways or in an embodiment the locking means 7 would not comprise slits 14. Instead the locking means 7 could be formed pleated, with curves or in other ways be arranges so than the diameter change of the locking means 7 is aided or enabled.

In this embodiment the collar means 8 is divided into two separate collar sector parts 11 arranged to substantially fully encircle the valve stem 4 when mounted in the valve housing 3. However, in another embodiment the collar means 8 could be divided into more separate collar sector parts 11 such as three, four, eight or more and/or in an embodiment at least some of the collar sector parts 11 would not be fully divided.

In this embodiment the collar means 8 are circular, forming the collar means 8 cylindrical to fit in the circular stem hole 9. However, in another embodiment the collar means 8 could be formed oval, polygonal, square or with another shape arranged to match a similar shape of the stem hole 9 and thereby lock the collar means 8 and the valve housing 3 against mutual rotation. In another embodiment the valve 1 could also or instead comprise a dedicated fixture, bolts or other means capable of locking the collar means 8 and the valve housing 3 against mutual rotation.

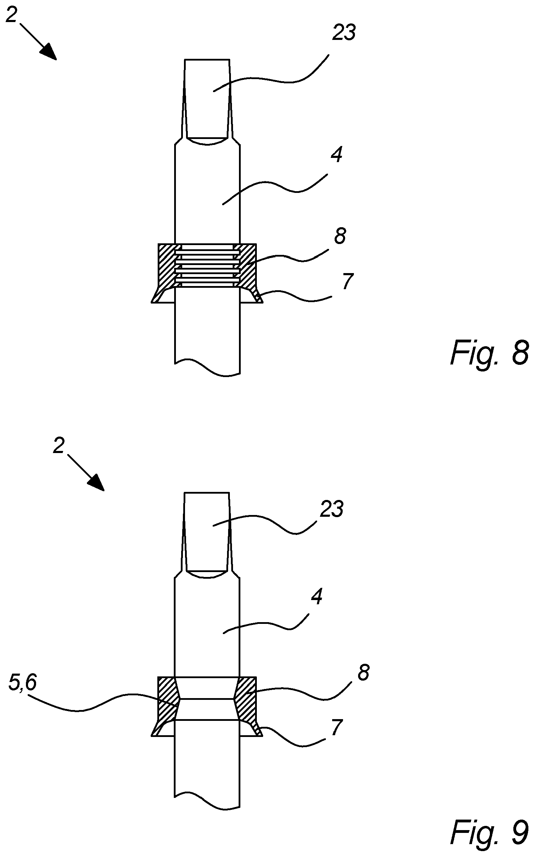

Fig. 8 illustrates a cross section through a first embodiment of a stem assembly 2, as seen from the front.

Fig. 9 illustrates a cross section through a second embodiment of a stem assembly 2, as seen from the front.

In the embodiment disclosed in the other figures the stem friction surfaces 6 and the collar friction surfaces 5 are formed as parallel radially extending surfaces. However, in this embodiment the surfaces 5, 6 are formed angular in relation to a radial plane.

In this embodiment, the angle between the two stem friction surfaces is 154° (and likewise for the collar friction surfaces to make the surfaces 5, 6 match) but in another embodiment the angle could be smaller or bigger - e.g. between 145° and 165°. The angled friction surfaces 5, 6 create a wedging-effect when forced against each other which increases resistance and protects against damaging overloads.

If the angle between the friction surfaces 5, 6 is too little the wedging-effect becomes too little and the abutting friction surface areas will have to be increased accordingly to achieve the same effect. However, if the angle is too big the risk of the mutual friction surfaces 5, 6 actually wedging to a degree that they cannot be easily separated again becomes too high.

In embodiments disclosed in all the figures, the stem friction surfaces 6 are formed integrally with the valve stem 4. However, in another embodiment the stem friction surfaces 6 could be formed separate form - but attached rigidly to - the valve stem 4 - e.g. by means of bolts, welding, adhesives or other.

The invention has been exemplified above with reference to specific examples of valves 1, valve stems 4, collar means 8 and other. However, it should be understood that the invention is not limited to the particular examples described above but may be designed and altered in a multitude of varieties within the scope of the invention as specified in the claims.

### List

- 1.: Valve
- 2.: Stem assembly
- 3.: Valve housing
- 4.: Valve stem
- 5.: Collar friction surface
- 6.: Stem friction surface
- 7.: Locking means
- 8.: Collar means
- 9.: Stem hole
- 10.: Locking groove
- 11.: Collar sector parts
- 12.: Stop
- 13.: Free end of locking means
- 14.: Slit
- 15.: Nut
- 16.: Threaded part of valve stem
- 17.: Wedge
- 18.: Outer edge of locking means
- 19.:
- 20.:
- 21.:
- 22.: End flange
- 23.: Connection arrangement of valve stem
- 24.: Guide means
- DH.: Diameter of stem hole
- DL.: Outer diameter of locking means
- DC.: Outer diameter of collar means
- TC.: Wall thickness of collar means
- TL.: Wall thickness of locking means

## Claims

1. A method for assembling a valve (1), said method comprising the steps of
• assembling a stem assembly (2) by positioning collar means (8) on a valve stem (4) so that collar friction surfaces (5) of said collar means (8) meshes with stem friction surfaces (6) of said valve stem (4) to substantially prevent mutual axial displacement between said collar means (8) and said valve stem (4),
• bending resilient locking means (7) of said collar means (8) inwards by forcing said stem assembly (2) into a stem hole (9) in a valve housing (3), wherein the diameter (DH) of said stem hole (9) is smaller than the outer diameter (DL) of said locking means (7), and
• locking the axial position of said stem assembly (2) in said valve housing (3) by positioning said locking means (7) at a locking groove (10) in said stem hole (9) to allow said resilient locking means (7) to expand outwards into said locking groove (10).

2. A method according to claim 1, wherein positioning said locking means (7) at said locking groove (10) includes pushing said stem assembly (2) against a stop (12) in said stem hole (9).

3. A method according to claim 2, wherein said collar means (8) are pushed against said stop (12).

4. A method according to any of the preceding claims, wherein said collar means (8) is positioned on said valve stem (4) by placing more than one radially divided collar sector parts (11) around said valve stem (4).

5. A method according to claim 4, wherein said more than one radially divided collar sector parts (11) are positioned to substantially enclose said valve stem (4).

6. A valve (1) for control of a fluid flow, said valve (1) comprising
a valve housing (3) having a stem hole (9), wherein a locking groove (10) is arranged in said stem hole (9),
a valve stem (4) extending at least partly through said stem hole (9), wherein said valve stem (4) comprises stem friction surfaces (6),
collar means (8) comprising collar friction surfaces (5), wherein said collar friction surfaces (5) meshes with said stem friction surfaces (6) to substantially prevent mutual axial displacement between said collar means (8) and said valve stem (4),
**characterized in that**,
said collar means (8) further comprises resilient locking means (7) extending into said locking groove (10) to substantially prevent mutual axial displacement between said collar means (8) and said valve housing (3).

7. A valve (1) according to claim 6, wherein an outer diameter (DL) of said locking means (7) gradually increases towards a free end (13) of said collar means (8).

8. A valve (1) according to claim 6 or 7, wherein a wall thickness (TL) of said locking means (7) is reduced in relation to a wall thickness (TC) of at least a part of the remaining collar means (8) to increase the resilient quality of said locking means (7).

9. A valve (1) according to any of claims 6 to 8, wherein a free end (13) of said locking means (7) taper towards an outer edge (18).

10. A valve (1) according to any of the preceding claims 6 to 9, wherein said collar means (8) comprises more than one set of collar friction surfaces (5) and said valve stem (4) comprises more than one set of stem friction surfaces (6).

11. A valve (1) according to any of the preceding claims 6 to 10, wherein said valve stem (4) is made from a first material and said collar means (8) is made from a second material, and wherein said first material is different from said second material.

12. A valve (1) according to any of the preceding claims 6 to 11, wherein said collar means (8) is formed by more than one collar sector parts divided in an axial direction (11).

13. A valve (1) according to any of the preceding claims 6 to 12, wherein said collar means (8) comprises at least one full solid ring.

14. A valve (1) according to any of the preceding claims 6 to 13, wherein said collar means (8) is mounted on said valve stem (4) by means of shrinkage.

15. A valve (1) according to any of the preceding claims 6 to 14, wherein said collar means (8) comprises at least one ring including an axial slit.

## Patentansprüche

1. Verfahren zur Montage eines Ventils (1), wobei das Verfahren die folgenden Schritte umfasst:
• ein Montieren einer Schaftgruppe (2) durch Positionieren eines Manschettenmittels (8) auf einem Ventilschaft (4), so dass Manschettenreibungsflächen (5) des Manschettenmittels (8) mit Schaftreibungsflächen (6) des Ventilschafts (4) eingreifen, um im Wesentlichen eine gegenseitige axiale Verschiebung zwischen dem Manschettenmittel (8) und dem Ventilschaft (4) zu verhindern,
• ein Biegen elastischer Verriegelungsmittel (7) des Manschettenmittels (8) nach innen, indem die Schaftgruppe (2) in ein Schaftloch (9) in einem Ventilgehäuse (3) gebogen wird, wobei der Durchmesser (DH) des Schaftlochs (9) kleiner als der Außendurchmesser (DL) des Verriegelungsmittels (7) ist, und
• ein Verriegeln der Axialposition der Schaftgruppe (2) im Ventilgehäuse (3) durch Positionieren des Verriegelungsmittels (7) an einer Verriegelungsrille (10) im Schaftloch (9), um es dem elastischen Verriegelungsmittel (7) zu ermöglichen, sich nach außen in die Verriegelungsrille (10) zu erstrecken.

2. Verfahren nach Anspruch 1, wobei das Positionieren des Verriegelungsmittels (7) an der Verriegelungsrille (10) ein Schieben der Schaftgruppe (2) gegen einen Anschlag (12) im Schaftloch (9) beinhaltet.

3. Verfahren nach Anspruch 2, wobei das Manschettenmittel (8) gegen den Anschlag (12) geschoben wird.

4. Verfahren nach einem der vorangehenden Ansprüche, wobei das Manschettenmittel (8) auf dem Ventilschaft (4) positioniert wird, indem mehr als ein radial unterteilte Manschettenabschnittteile (11) um den Ventilschaft (4) platziert werden.

5. Verfahren nach Anspruch 4, wobei die mehr als eine radial unterteilte Manschettenabschnittteile (11) positioniert werden, um den Ventilschaft (4) im Wesentlichen zu umschließen.

6. Ventil (1) zum Steuern eines Fluidstroms, wobei das Ventil (1) ein Ventilgehäuse (3) mit einem Schaftloch (9) umfasst, wobei eine Verriegelungsrille (10) im Schaftloch (9) angeordnet ist, sich ein Ventilschaft (4) mindestens teilweise durch das Schaftloch (9) erstreckt, wobei der Ventilschaft (4) Schaftreibungsflächen (6), Manschettenmittel (8), umfassend Manschettenreibungsflächen (5) umfasst, wobei die Manschettenreibungsflächen (5) mit den Schaftreibungsflächen (6) eingreifen, um im Wesentlichen eine gegenseitige axiale Verschiebung zwischen dem Manschettenmittel (8) und dem Ventilschaft (4) zu verhindern, **dadurch gekennzeichnet, dass**
das Manschettenmittel (8) ferner elastische Verriegelungsmittel (7) umfasst, die sich in die Verriegelungsrille (10) erstrecken, um im Wesentlichen eine gegenseitige axiale Verschiebung zwischen dem Manschettenmittel (8) und dem Ventilgehäuse (3) zu verhindern.

7. Ventil (1) nach Anspruch 6, wobei ein Außendurchmesser (DL) des Verriegelungsmittels (7) graduell zu einem freien Ende (13) des Manschettenmittels (8) zunimmt.

8. Ventil (1) nach Anspruch 6 oder 7, wobei eine Wanddicke (TL) des Verriegelungsmittels (7) in Beziehung zu einer Wanddicke (TC) von mindestens einem Teil des verbleibenden Manschettenmittels (8) verringert ist, um die elastische Qualität des Verriegelungsmittels (7) zu erhöhen.

9. Ventil (1) nach einem der Ansprüche 6 bis 8, wobei sich ein freies Ende (13) des Verriegelungsmittels (7) zu einer äußeren Kante (18) verjüngt.

10. Ventil (1) nach einem der vorangehenden Ansprüche 6 bis 9, wobei das Manschettenmittel (8) mehr als ein Satz von Manschettenreibungsflächen (5) umfasst und der Ventilschaft (4) mehr als ein Satz von Schaftreibungsflächen (6) umfasst.

11. Ventil (1) nach einem der vorangehenden Ansprüche 6 bis 10, wobei der Ventil schaft (4) aus einem ersten Material hergestellt ist und das Manschettenmittel (8) aus einem zweiten Material hergestellt ist, und wobei sich das erste Material vom zweiten Material unterscheidet.

12. Ventil (1) nach einem der vorangehenden Ansprüche 6 bis 11, wobei das Manschettenmittel (8) aus mehr als einem Manschettenabschnittteilen geformt ist, die in einer Axialrichtung (11) unterteilt sind.

13. Ventil (1) nach einem der vorangehenden Ansprüche 6 bis 12, wobei das Manschettenmittel (8) mindestens einen vollen massiven Ring umfasst.

14. Ventil (1) nach einem der vorangehenden Ansprüche 6 bis 13, wobei das Manschettenmittel (8) mittels Schrumpfung auf dem Ventilschaft (4) montiert ist.

15. Ventil (1) nach einem der vorangehenden Ansprüche 6 bis 14, wobei das Manschettenmittel (8) mindestens einen einen Axialschlitz beinhaltenden Ring umfasst.

## Revendications

1. Procédé d'assemblage d'une soupape (1), ledit procédé comprenant les étapes de :
• assemblage d'un ensemble de tige (2) en positionnant un moyen de collier (8) sur une tige de soupape (4) de sorte que des surfaces de friction de collier (5) dudit moyen de collier (8) s'engrènent avec des surfaces de friction de tige (6) de ladite tige de soupape (4) pour empêcher sensiblement un déplacement axial mutuel entre ledit moyen de collier (8) et ladite tige de soupape (4),
• torsion d'un moyen de verrouillage élastique (7) dudit moyen de collier (8) vers l'intérieur en forçant ledit ensemble de tige (2) dans un trou de tige (9) dans un boîtier de soupape (3), dans lequel le diamètre (DH) dudit trou de tige (9) est plus petit que le diamètre extérieur (DL) dudit moyen de verrouillage (7), et
• verrouillage de la position axiale dudit ensemble de tige (2) dans ledit boîtier de soupape (3) en positionnant ledit moyen de verrouillage (7) au niveau d'une rainure de verrouillage (10) dans ledit trou de tige (9) pour permettre audit moyen de verrouillage élastique (7) de s'étendre vers l'extérieur dans ladite rainure de verrouillage (10).

2. Procédé selon la revendication 1, dans lequel le positionnement dudit moyen de verrouillage (7) au niveau de ladite rainure de verrouillage (10) comprend la poussée dudit ensemble de tige (2) contre une butée (12) dans ledit trou de tige (9).

3. Procédé selon la revendication 2, dans lequel ledit moyen de collier (8) est poussé contre ladite butée (12).

4. Procédé selon l'une quelconque des revendications précédentes, dans lequel ledit moyen de collier (8) est positionné sur ladite tige de soupape (4) en plaçant plusieurs parties de secteur de collier divisées radialement (11) autour de ladite tige de soupape (4).

5. Procédé selon la revendication 4, dans lequel lesdites plusieurs parties de secteur de collier divisées radialement (11) sont positionnées pour enfermer sensiblement ladite tige de soupape (4).

6. Soupape (1) pour réguler un écoulement de fluide, ladite soupape (1) comprenant un boîtier de soupape (3) ayant un trou de tige (9), dans lequel une rainure de verrouillage (10) est disposée dans ledit trou de tige (9), une tige de soupape (4) s'étendant au moins partiellement à travers ledit trou de tige (9), dans lequel ladite tige de soupape (4) comprend des surfaces de friction de tige (6), un moyen de collier (8) comprenant des surfaces de friction de collier (5), dans lequel lesdites surfaces de friction de collier (5) s'engrènent avec lesdites surfaces de friction de tige (6) pour empêcher sensiblement un déplacement axial mutuel entre ledit moyen de collier (8) et ladite tige de soupape (4), **caractérisé en ce que**,
ledit moyen de collier (8) comprend en outre un moyen de verrouillage élastique (7) s'étendant dans ladite rainure de verrouillage (10) pour empêcher sensiblement un déplacement axial mutuel entre ledit moyen de collier (8) et ledit boîtier de soupape (3).

7. Soupape (1) selon la revendication 6, dans laquelle un diamètre extérieur (DL) dudit moyen de verrouillage (7) augmente progressivement vers une extrémité libre (13) dudit moyen de collier (8).

8. Soupape (1) selon la revendication 6 ou 7, dans laquelle une épaisseur de paroi (TL) dudit moyen de verrouillage (7) est réduite par rapport à une épaisseur de paroi (TC) d'au moins une partie du moyen de collier restant (8) pour augmenter la qualité élastique dudit moyen de verrouillage (7).

9. Soupape (1) selon l'une quelconque des revendications 6 à 8, dans laquelle une extrémité libre (13) dudit moyen de verrouillage (7) se rétrécit vers un bord extérieur (18).

10. Soupape (1) selon l'une quelconque des revendications précédentes 6 à 9, dans laquelle ledit moyen de collier (8) comprend plusieurs ensembles de surfaces de friction de collier (5) et ladite tige de soupape (4) comprend plusieurs ensembles de surfaces de friction de tige (6).

11. Soupape (1) selon l'une quelconque des revendications précédentes 6 à 10, dans laquelle ladite tige de soupape (4) est fabriquée à partir d'un premier matériau et ledit moyen de collier (8) est fabriqué à partir d'un deuxième matériau, et dans lequel ledit premier matériau est différent dudit deuxième matériau.

12. Soupape (1) selon l'une quelconque des revendications précédentes 6 à 11, dans laquelle ledit moyen de collier (8) est formé par plusieurs parties de secteur de collier divisées dans une direction axiale (11).

13. Soupape (1) selon l'une quelconque des revendications précédentes 6 à 12, dans laquelle ledit moyen de collier (8) comprend au moins un anneau plein complet.

14. Soupape (1) selon l'une quelconque des revendications précédentes 6 à 13, dans laquelle ledit moyen de collier (8) est monté sur ladite tige de soupape (4) au moyen d'un rétrécissement.

15. Soupape (1) selon l'une quelconque des revendications 6 à 14 précédentes, dans laquelle ledit moyen de collier (8) comprend au moins une bague comprenant une fente axiale.
